# EUROPEAN PATENT SPECIFICATION

(11) **EP 3 282 830 B1**
(45) Date of publication and mention of the grant of the patent: **27.12.2023**
(21) Application number: 16720057.5
(22) Date of filing: 15.04.2016
(51) Int. Cl.: A01G 9/02, A01G 31/06, B62D 33/02, B65G 1/04, B65G 1/06, E04B 1/348, B65G 57/03, B65G 63/00, B65G 67/02

(54) **GROWING SYSTEM**
WACHSTUMSSYSTEM
SYSTÈME DE CULTURE

(30) Priority: 15.04.2015 GB 201506365; 13.08.2015 GB 201514428; 13.10.2015 GB 201518089; 13.10.2015 GB 201518091; 13.10.2015 GB 201518094; 13.10.2015 GB 201518111; 13.10.2015 GB 201518115; 13.10.2015 GB 201518117; 09.02.2016 GB 201602332; 25.02.2016 GB 201603328
(43) Date of publication of application: 21.02.2018
(73) Proprietor: Ocado Innovation Limited, Hatfield, Herts AL10 9UL (GB)
(72) Inventor: LINDBO, Lars Sverker Ture, Hatfield, Herts AL10 9NE (GB); CLARKE, Paul, Hatfield, Herts AL10 9NE (GB); INGRAM-TEDD, Andrew John, Hatfield, Herts AL10 9NE (GB); KAROLINCZAK, Pawel, Hatfield, Herts AL10 9NE (GB); HOWARD WHITAKER, Alexander, Hatfield, Herts AL10 9NE (GB)
(74) Representative: Ocado Group IP Department
(86) International application number: PCT/EP2016/058384
(87) International publication number: WO 2016/166311

(56) References cited:
- EP-A1- 2 308 283
- WO-A1-2014/203126
- WO-A2-03/060648
- GB-A- 2 514 930
- US-A1- 2003 005 626
- US-A1- 2010 275 512
- US-A1- 2014 026 474
- US-A1- 2014 069 007

## Description

The present invention relates to a growing system. More specifically, it relates to a mechanised plant growing system.

This application claims priority from UK Patent Application Nos. GB1506365.4 filed 15th April 2015, GB1514428.0 filed 13th August 2015, GB1518089.6 filed 13th October 2015, GB1602332.7 filed 9th February 2016, GB1518091.2 filed 13th October 2015, GB1518094.6 filed 13th October 2015, GB1518111.8 filed 13th October 2015, GB1518115.9 filed 13th October 2015, GB1518117.5 filed 13th October 2015 and GB1603328.4 filed 25th February 2016.

Conventional systems and methods for growing certain crops are well known. Most require large areas of land and need to be positioned in appropriate locations for the conditions required for the crops to be grown.

More recently, advanced farming techniques such as hydroponics have led to the ability to grow high quality crops indoors with very high utilisation of lighting, water and fertiliser. These systems have however been less efficient in terms of land use, capital and labour. The present invention describes a method for dramatically improving these efficiencies. Some commercial and industrial activities require systems that enable the storage and retrieval of a large number of different products. GB2514930 A discloses an item handling apparatus and method in which relatively bulky or heavy items are pre-stored in containers, such as at a first station, and upon completion of an order for such items plus additional compact or light items, the additional items are placed into the pre-loaded containers, such as at a second station. One known type of system for the storage and retrieval of items in multiple product lines involves arranging storage containers or containers in stacks on top of one another, the stacks being arranged in rows. The storage containers or containers are accessed from above, removing the need for aisles between the rows and allowing more containers to be stored in a given space.

Methods of handling containers stacked in rows have been well known for decades. In some such systems, for example as described in US 2,701,065, to Bertel comprise freestanding stacks of containers arranged in rows in order to reduce the storage volume associated with storing such containers but yet still providing access to a specific container if required. Access to a given container is made possible by providing relatively complicated hoisting mechanisms which can be used to stack and remove given containers from stacks. The cost of such systems are, however, impractical in many situations and they have mainly been commercialised for the storage and handling of large shipping containers.

The concept of using freestanding stacks of containers and providing a mechanism to retrieve and store specific containers has been developed further, for example as described in EP 0 767 113 B to Cimcorp. '113 discloses a mechanism for removing a plurality of stacked containers, using a robotic load handler in the form of a rectangular tube which is lowered around the stack of containers, and which is configured to be able to grip a container at any level in the stack. In this way, several containers can be lifted at once from a stack. The movable tube can be used to move several containers from the top of one stack to the top of another stack, or to move containers from a stack to an external location and vice versa. Such systems can be particularly useful where all of the containers in a single stack contain the same product (known as a single-product stack).

In the system described in '113, the height of the tube has to be as least as high as the height of the largest stack of containers, so that that the highest stack of containers can be extracted in a single operation. Accordingly, when used in an enclosed space such as a warehouse, the maximum height of the stacks is restricted by the need to accommodate the tube of the load handler.

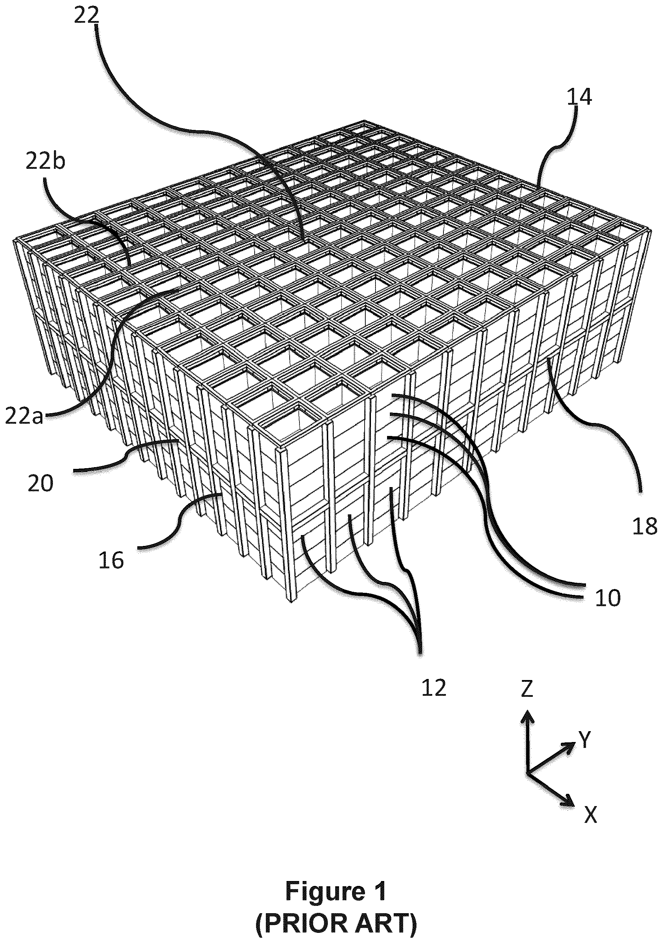

EP 1037828 B1 (Autostore) describes a system in which stacks of containers are arranged within a frame structure. A system of this type is illustrated schematically in Figures 1 to 4 of the accompanying drawings. Robotic load handling devices can be controllably moved around the stack on a system of tracks on the upper most surface of the stack.

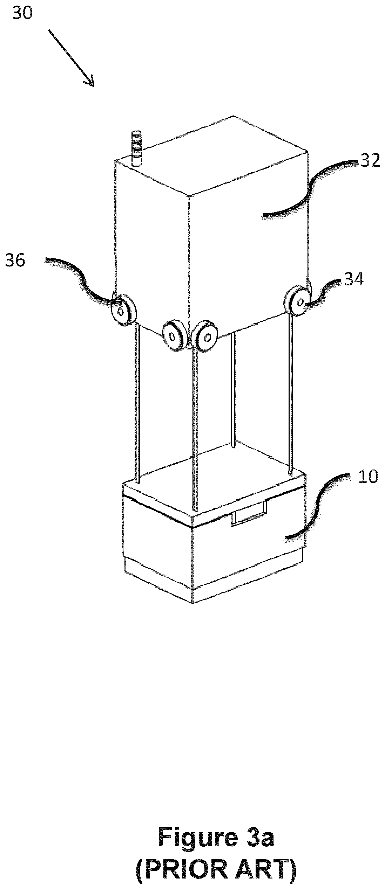

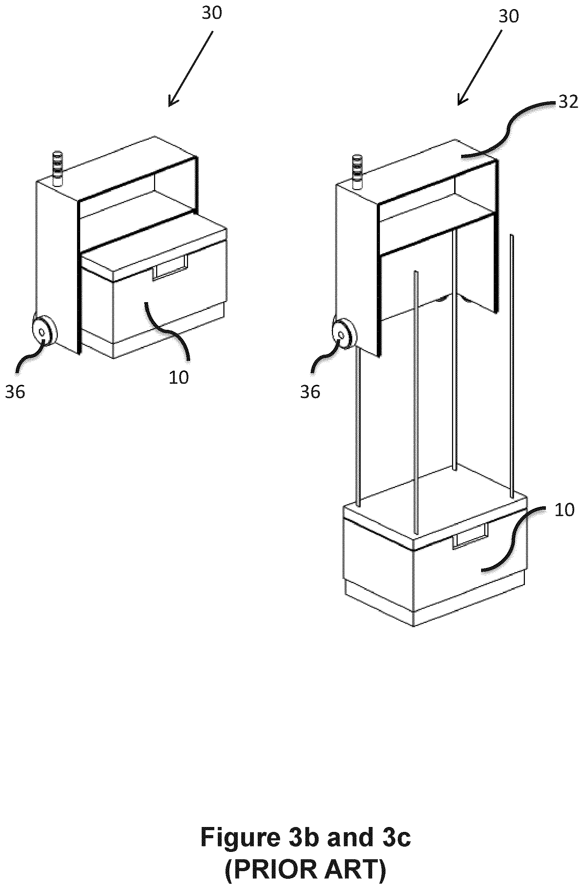

Other forms of robotic load handling device are further described in, for example, Norwegian patent number 317366. Figure 3(a) and 3(b) are schematic perspective views of a load handling device from the rear and front, respectively, and Figure 3(c) is a schematic front perspective view of a load handling device lifting a container.

A further development of load handling device is described in UK Patent Application No 1314313.6 (Ocado) where each robotic load handler only covers one grid space, thus allowing higher density of load handlers and thus higher throughput of a given size system.

In such known storage systems a large number of containers are stacked densely. The containers are conventionally used to store goods to supply online grocery orders picked by robots.

According to the invention there is provided a growing system comprising: a first set of substantially parallel rails or tracks and a second set of substantially parallel rails or tracks extending transverse to the first set in a substantially horizontal plane to form a grid pattern comprising a plurality of grid spaces; a plurality of storage containers arranged in stacks, located beneath the grid spaces and; at least one load handling device disposed on the tracks, arranged to move laterally above the stacks on the rails, the load handling device comprising a lifting device arranged to lift at least one container, or part thereof, from a stack; the system being characterised in that a number of the containers comprise service means suitable for cultivation, controlling or maintaining living organisms and connection means positioned on co-operating surfaces of the containers and configured to carry services between two or more co-operating containers in a stack so that the service can be transferred in the containers of the stack when the containers are located in the growing system, wherein the connection means comprises releasably latching connectors.

In one aspect of the invention the containers comprise sensor means and data logging means.

In a further aspect of the invention the containers comprise communication means to communicate data logged to a central data logging device.

In a further aspect of the invention the containers comprise a reservoir containing water or food suitable for the growth of plants contained within the container.

In a further aspect of the invention, the containers comprise lighting means.

A storage system may be used to grow plants in individual containers, the sheer number of containers enabling such crops to be mass produced in a much smaller area of land than would be required using conventional growing techniques.

Depending on the services provided in individual containers, the contents may be monitored for data relating to the contents of the container to be relayed to a central processing system. The data transmitted may provide information on the condition of the container, the contents of the container or may provide information on adjacent containers to condition monitor the entire growing system. Furthermore, in this way, the containers may be heated or cooled as required by the specific contents of the container.

Advantageously, individual containers within the growing system may be provided with services in addition to goods. Furthermore, individual containers within the growing system may not contain goods but may contain services for provision to other containers or to monitor the condition of the system.

In this way, the present invention overcomes the problems of the prior art and provides a system of increasing the reliability and reducing the overall cost of large container handling within growing systems.

The invention will now be described with reference to the accompanying diagrammatic drawings in which:
Figure 1 is a schematic perspective view of a frame structure for housing a plurality of stacks of containers in a storage system;
Figure 2 is a schematic plan view of part of the frame structure of Figure 1;
Figures 3(a) and 3(b) are schematic perspective views, from the rear and front respectively, of one form of robotic load handling device for use with the frame structure of Figures 1 and 2, and Figure 3(c) is a schematic perspective view of the known load handler device in use lifting a container;
Figure 4 is a schematic perspective view of a known storage system comprising a plurality of load handler devices of the type shown in Figures 3(a), 3(b) and 3(c), installed on the frame structure of Figures 1 and 2, together with a robotic service device.
Figure 5 is a schematic perspective view of a storage container in accordance with the invention, the container comprising growing means such as matting or soil;
Figures 6a, 6b, 6c and 6d are schematic perspective views of an individual storage container, the container comprising at least lighting means;
Figures 7a, 7b, 7c, 7d are schematic perspective views of a storage container, the container comprising fluid supply means;
Figures 8a and 8b are schematic perspective views of the growing system, the system comprising robotic picking means for thinning plants growing in the containers stored in the growing system;
Figures 9a and 9b are schematic perspective views of a further form of container for use within the growing system, the further form of container enabling the growing system to be used for plants sized from seedlings to tall mature plants; and
Figure 10 is a schematic perspective view of the uprights of the grid of the growing system, the uprights 16 carrying services for onward transmission to the containers, the system comprising the containers of Figures 5, 9a, and 9b.

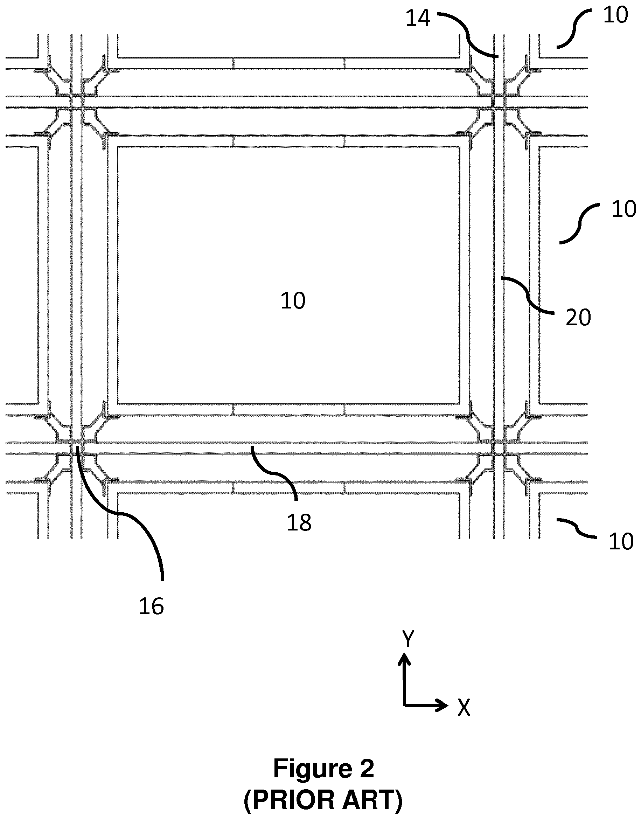

As shown in Figures 1 and 2, stackable containers, known as containers 10, are stacked on top of one another to form stacks 12. The stacks 12 are arranged in a framework structure 14 in a warehousing or manufacturing environment. Figure 1 is a schematic perspective view of the frame structure 14, and Figure 2 is a top-down view showing a single stack 12 of containers 10 arranged within the frame structure 14. Each container 10 typically holds a plurality of product items (not shown), and the product items within a container 10 may be identical, or may be of different product types depending on the application.

The framework structure 14 comprises a plurality of upright members 16 that support horizontal members 18, 20. A first set of parallel horizontal members 18 is arranged perpendicularly to a second set of parallel horizontal members 20 to form a plurality of horizontal grid structures supported by the upright members 16. The members 16, 18, 20 are typically manufactured from metal. The containers 10 are stacked between the members 16, 18, 20 of the frame structure 14, so that the frame structure 14 guards against horizontal movement of the stacks 12 of containers 10, and guides vertical movement of the containers 10.

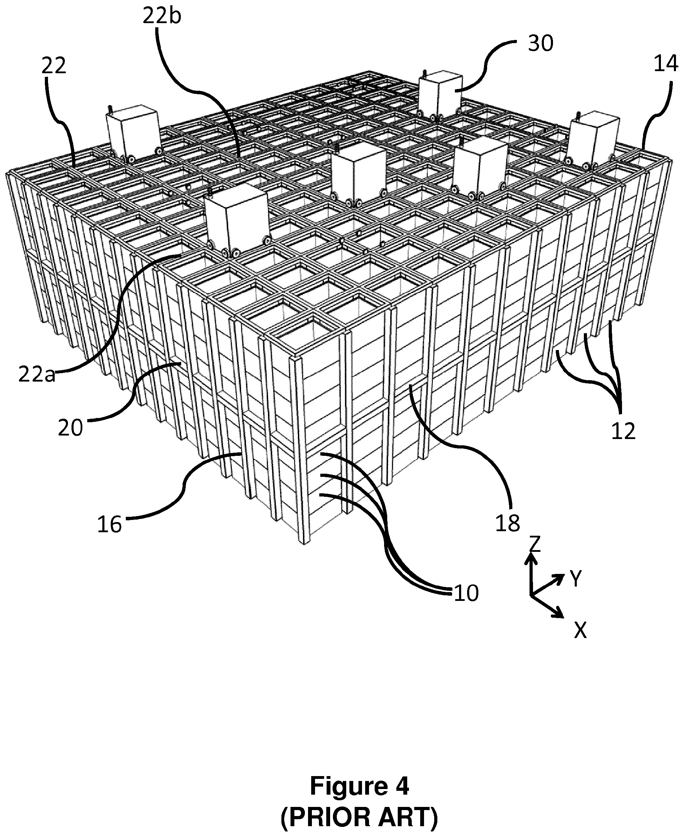

The top level of the frame structure 14 includes rails 22 arranged in a grid pattern across the top of the stacks 12. Referring additionally to Figures 3 and 4, the rails 22 support a plurality of robotic load handling devices 30. A first set 22a of parallel rails 22 guide movement of the load handling devices 30 in a first direction (X) across the top of the frame structure 14, and a second set 22b of parallel rails 22, arranged perpendicular to the first set 22a, guide movement of the load handling devices 30 in a second direction (Y), perpendicular to the first direction. In this way, the rails 22 allow movement of the load handling devices 30 in two dimensions in the X-Y plane, so that a load handling device 30 can be moved into position above any of the stacks 12.

Each load handling device 30 comprises a vehicle 32 which is arranged to travel in the X and Y directions on the rails 22 of the frame structure 14, above the stacks 12. A first set of wheels 34, consisting of a pair of wheels 34 on the front of the vehicle 32 and a pair of wheels 34 on the back of the vehicle 32, are arranged to engage with two adjacent rails of the first set 22a of rails 22. Similarly, a second set of wheels 36, consisting of a pair of wheels 36 on each side of the vehicle 32, are arranged to engage with two adjacent rails of the second set 22b of rails 22. Each set of wheels 34, 36 can be lifted and lowered, so that either the first set of wheels 34 or the second set of wheels 36 is engaged with the respective set of rails 22a, 22b at any one time.

When the first set of wheels 34 is engaged with the first set of rails 22a and the second set of wheels 36 are lifted clear from the rails 22, the wheels 34 can be driven, by way of a drive mechanism (not shown) housed in the vehicle 32, to move the load handling device 30 in the X direction. To move the load handling device 30 in the Y direction, the first set of wheels 34 are lifted clear of the rails 22, and the second set of wheels 36 are lowered into engagement with the second set of rails 22a. The drive mechanism can then be used to drive the second set of wheels 36 to achieve movement in the Y direction.

In this way, one or more robotic load handling devices 30 can move around the top surface of the stacks 12 on the frame structure 14 under the control of a central picking system (not shown). Each robotic load handling device 30 is provided with means for lifting out one or more containers or containers from the stack to access the required products. In this way, multiple products can be accessed from multiple locations in the grid and stacks at any one time.

Figure 4 shows a typical storage system as described above, the system having a plurality of load handling devices 30 active on the stacks 12.

Figures 1 and 4 show the containers 10 in stacks 12 within the storage system. It will be appreciated that there may be a large number of containers in any given storage system and that many different plant or crop varieties may be grown in the containers in the stacks 12.

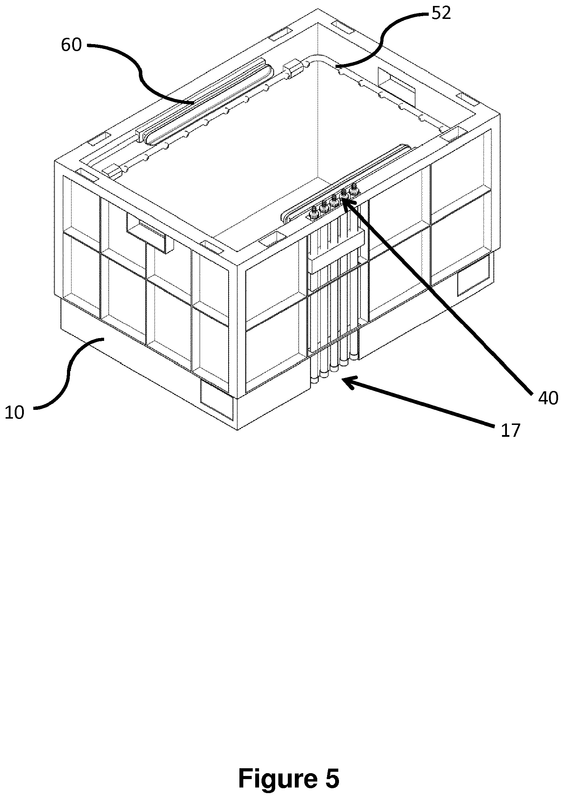

Figure 5 shows an individual container 10 for growing plants. The plants are grown on growing means 13 such as matting or soil located in the containers 10. Beneath the matting 13 the container may comprise a reservoir 54 (not shown) the reservoir containing water and/or plant food suitable for the plant being grown in the container.

The containers 10 are held in stacks by co-operating surfaces on adjacent containers 10. The containers 10 of Figure 5, additionally comprise connection means 40 positioned at the intended co-operating surfaces of the containers 10. The connection means 40 may comprise electrically conductive layers deposited on the co-operating surfaces of the containers 10 or may comprise sprung-loaded contacts or springs as contacts or any other connection means capable of carrying power between two or more containers 10. Furthermore, the connection means 40 may comprise carbon loaded rubber contacts capable of carrying signals between two or more co-operating containers 10 in a stack.

The connecting means 40 shown in Figure 5 comprise releasably latching connectors capable of carrying power, fluids (such as water and fertilizers) and other services or utilities required in the plant growing system

Individual containers 10 may comprise power supply means for supplying power to, for example, heating means, cooling means, data logging means, communication means and/or lighting means 60. Each individual container 10 may further comprise power control means for controlling the power to the or each service and controlling the power to other containers 10 in the stack 12 if power is to be transmitted to adjacent containers 10 in the stack 12. It will be appreciated that containers 10 comprising power control and control means are not limited to powering heaters, coolers or lights. Anything requiring power may utilise the power supply means. The power supply means may comprise batteries or may comprise means for transmitting power from an external power source through connection means 40 on the containers 10 or via the uprights 16 of the framework structure. Non-contacting methods of power transmission may also be used, for example magnetic induction or RF induction and optical methods.

Figure 5 shows in detail a container 10 suitable for growing plant means. The container comprises lighting means 60 which may radiate light of a predetermined wavelength suitable for growing a desired crop. Furthermore, the container 10 comprises fluid supply means 52 which when activated, may sprinkle a predetermined amount of water on the crops growing in the container 10. The power to the lighting means 60 and the fluid supply to the sprinkling means 52 are routed through the container 10 via routing means 17 that run along one side of the container 10. The container is further provided with connecting means 40 to enable services to be routed up a stack 12 of containers 10 when the containers 10 are located in the growing system.

It will be appreciated that although in Figure 5 the routing means are shown as mounted on the container 10, it is possible to form a container 10 such that the container comprises mouldings suitable to act as routing means 17.

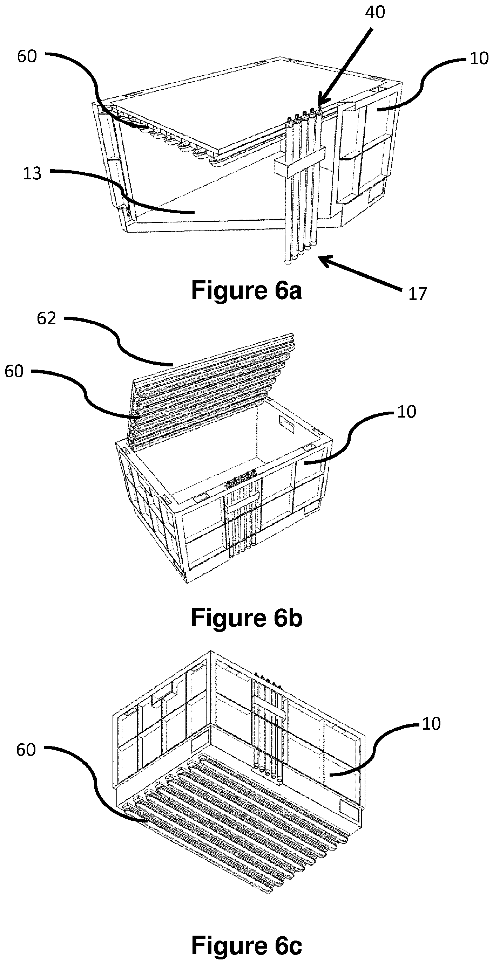

Figures 6a to 6d show a further forms of container 10 from the stack 12, the container 10 comprising various configurations of lighting means 60. As shown in Figures 6a and 6b, the lighting means 60 may comprise a lid containing suitable bulbs, LEDs or any other suitable form of lighting 60. The lid may be removably attached to the container 10 and fold away during removal of the container 10 from the stack 12.

Alternatively, as shown in Figure 6c the lighting means 60 may be provided in the base of a container 10 to light the container 10 below in the stack 12.

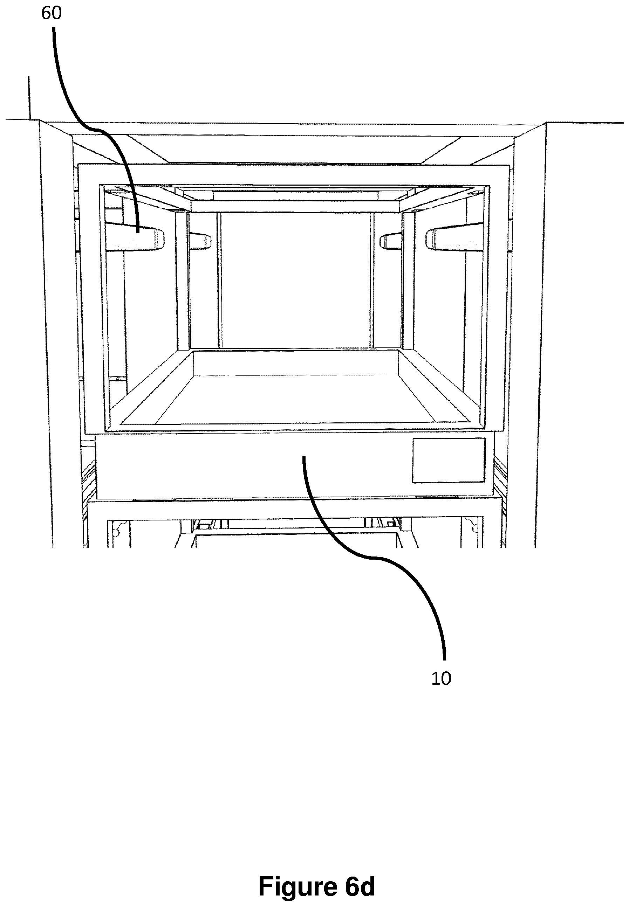

Furthermore, as shown in Figure 6d the container 10 may be lit from a point external to the container 10, for example from the uprights 16 of the grid or the ceiling of the warehouse containing the storage system. As can be seen in Figure 6d, positioning the lighting means 60 on the uprights 16 of the framework requires the sides of the container 10 to be removed. In essence this form of container is a plant growing tray having supports only at the corners, to allow the container 10 to be stacked on top of other containers 10 and to support containers 10 above.

Individual containers 10 may further comprising data logging means and communication means for transmitting data recorded to a remote central data logging device. The data logging means comprises sensors suitable for monitoring the conditions in the container 10, for example the temperature, any gas emission, for example as a result of decomposing fruit, and humidity. The data logging means and communicating means enable the content and condition of individual containers 10 to be monitored. Furthermore, knowing information about specific containers 10 in the stacks 12 in the system enables the condition of the growing system as a whole to be monitored. It will be appreciated that the type and method of communication may be but need not be limited to WiFi. Any suitable form of communication protocol or method may be used. Individual containers 10 in the stack 12, may further comprise heating and/or cooling means and temperature monitoring means for monitoring the temperature in the container 10. The heating means may comprise flow of hot fluid via direct means, for example hot air, or indirect means, for example radiator means or may further comprise electrical heaters or electromagnetic induction heaters.

The cooling means may comprise Peltier coolers or may comprise flow of cold fluid via direct means, for example cold air or via indirect means, for example radiator means, including ice slurry compressor driven.

In this way, the temperatures of individual containers 10 may be controlled and varied depending on the content of the individual container 10. If the contents of the container need to be chilled, then the individual container can have a temperature of 5 degrees C maintained rather than requiring a portion of the stacks 12 in the growing system to be maintained at a predetermined temperature by space heaters and coolers. It will be appreciated that these are examples only and any suitable form of heater or chiller may be used to achieve the desired effect.

It may be preferable for air to be blown across the containers 10 within the stacks 12 of the plant growing system. This may be achieved by generating an airflow throughout the system either utilising fans or other airflow means.

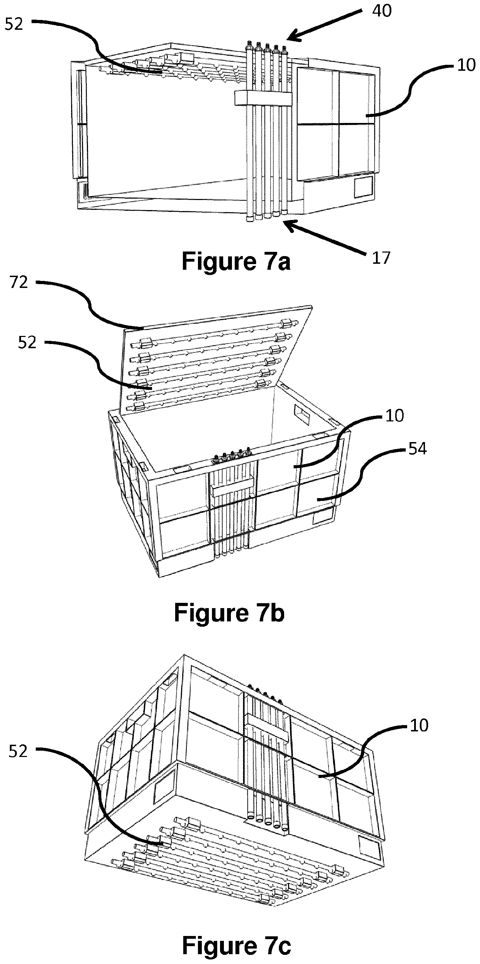

Figures 7a to 7d show a further form of container 10 from a stack 12, the container 10 comprising fluid supply means 52 and further comprising a fluid reservoir (not shown). The contents of the container 10 may require water to be supplied thereto. Accordingly, the container 10 is provided with a reservoir that may be filled with a liquid or gas. In order to fill the reservoir 54, the container 10 may be removed from the stack 12 by the robotic load handling device and taken to a location in the system where the reservoir can be topped up as required. As shown in Figure 7a and 7b water and nutrients may be supplied via a sprinkler system 52 in a lid portion of the container 10. Alternatively, as shown in Figure 7c, sprinklers 52 may be located in the base of the container 10 to provide water and/or nutrients to the plants in the container 10 below in the stack 12. In a further example, as shown in Figure 7c, a container lid 72 comprising fluid supply means is removably attached to the container 10 and folded away during removal of the container 10 from the stack 12.

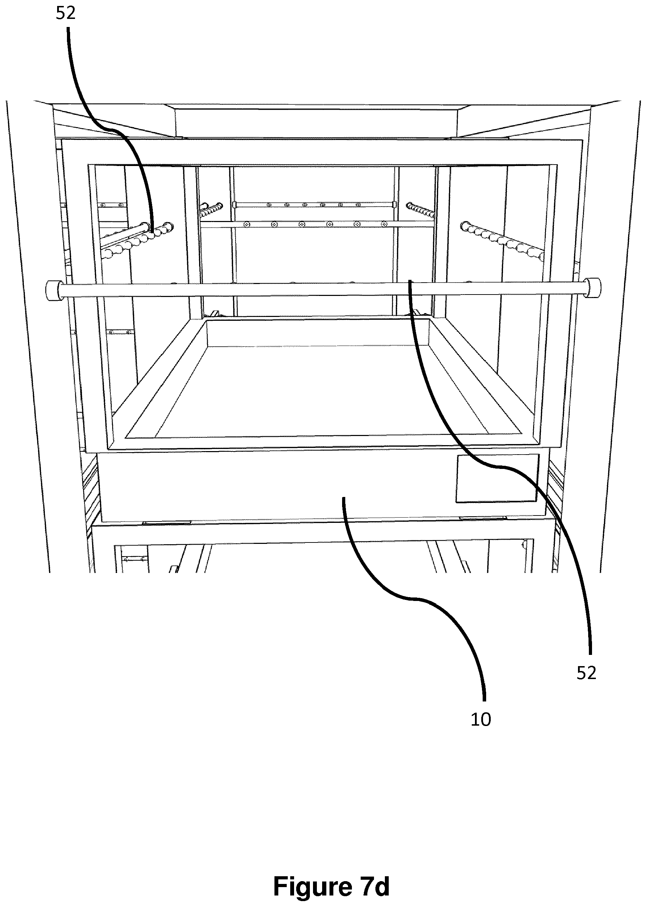

Figure 7d shows an alternative form of container 10 in which the fluid supply means are routed via the uprights 16 of the framework. This again requires the sides of the container 10 to be removed. In essence this form of container is a plant growing tray having supports only at the corners, to allow the container 10 to be stacked on top of other containers 10 and to support containers 10 above.

It will be appreciated that the uprights 16 of the grid of the growing system may carry any of the services referred to herein or alternative services for onward transmission to the containers 10 by wires, cables or pipes or any other suitable means.

UK Patent Application Nos GB1518091.2 and GB1518115.9, from which the present application claims priority, detail systems and methods of routing services through containers 10 and framework structures.

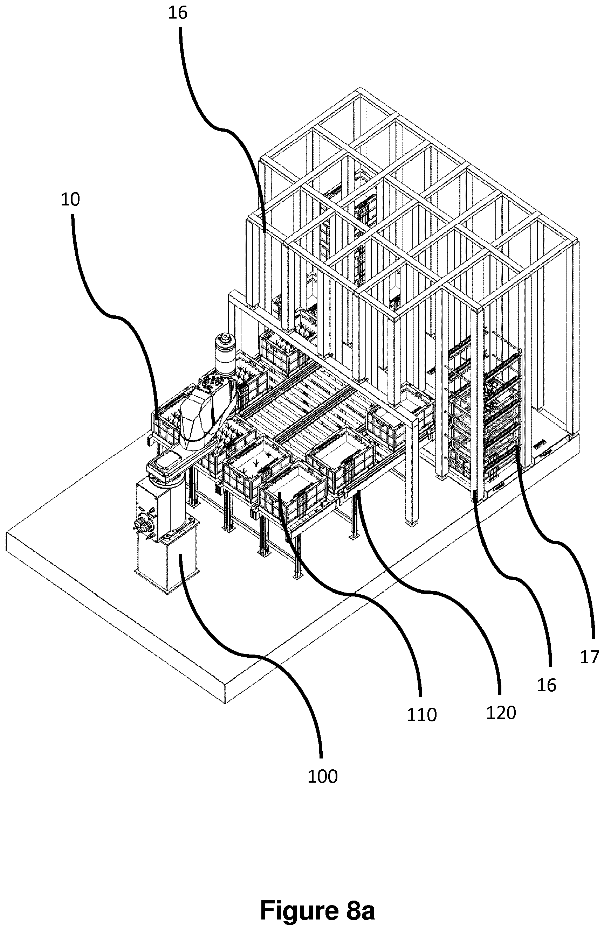

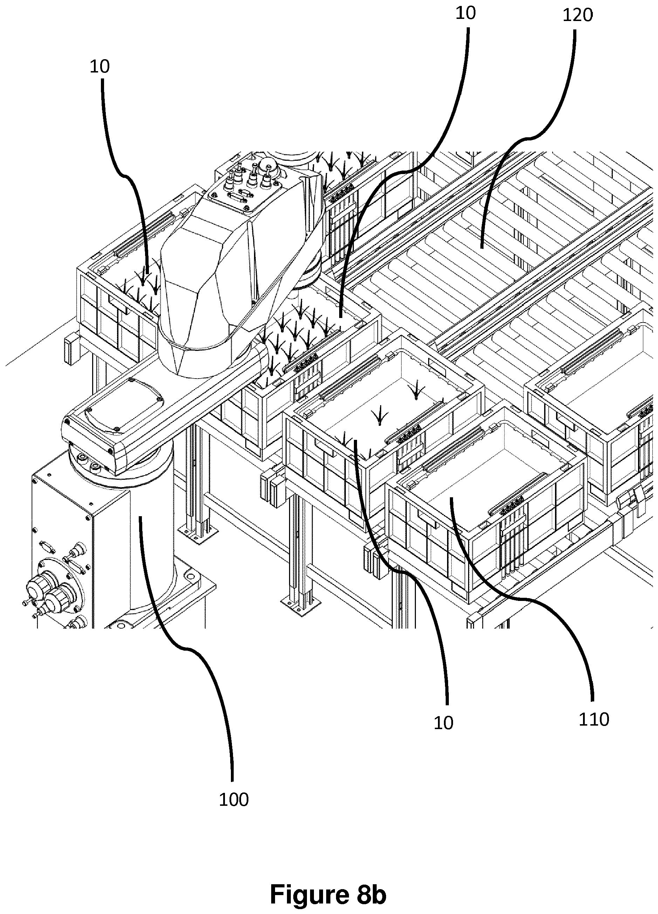

Figures 8a and 8b show a service portion of the growing system described above. For clarity only a portion of the framework structure is shown with a representative number of containers 10 shown in a stack 12 within the framework. A portion of the containers 110 located within the system comprise growing means only in preparation for use. A portion of the containers 10 in the system comprise plants that have become too large for the spacing regime in which they were originally planted. Accordingly, one function of the service area of the system may be to thin out containers 10 comprising overcrowded plants out by picking a proportion of plants from an overcrowded container 10 to replant in a container 110 comprising growing means only.

A robotic picking device 100 may be provided to fully automate this task. However, it will be appreciated that the task may be performed manually by operatives at the service area of the growing system.

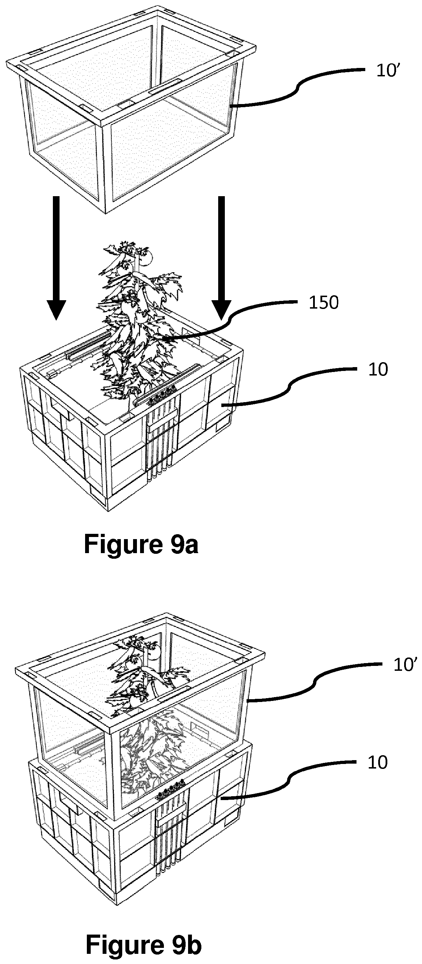

Figures 9a and 9b show a further form of container 10 for use in the growing system. During the life cycle of the crop grown in the system the crop concerned may reach a height whereby it is protruding from the top of the container 10. The container shown in Figure 9a and 9b is a spacer container 10' that acts so as to allow the plant 150 to continue to grow in the system despite reaching such a height. The spacer container 10' may be placed over the plant and act as a support for any container 10 placed above in the stack 12 of containers 10. The spacer container 10' may comprise plastics material that allows light to pass therethrough. Furthermore, the spacer container 10' may comprise services routed as described for a normal container 10 above.

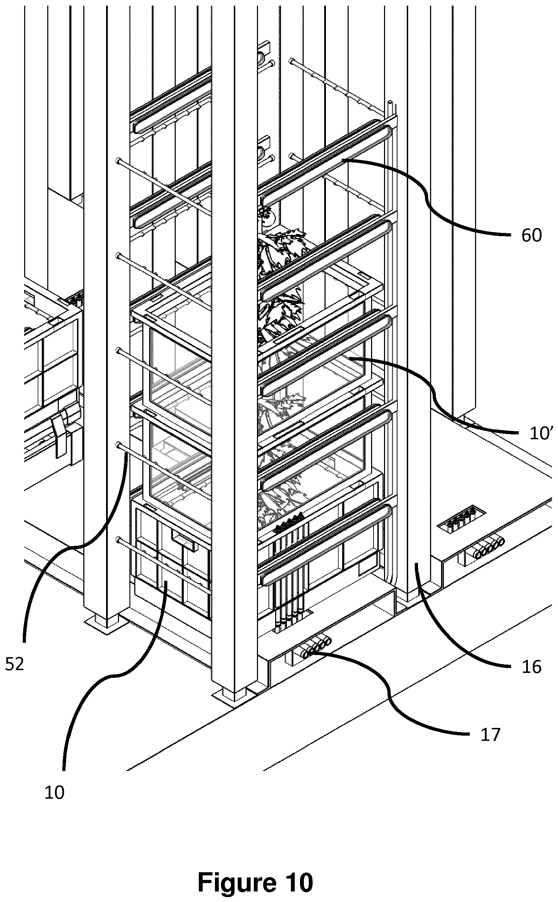

Figure 10 shows two of the spacer containers 10' described above located in a stack above a container 10 carrying a plant 150 of a substantial height when compared with that of a container 10. Figure 10 further shows the uprights 16 of the growing system carrying lighting means 60 and watering means 52. Furthermore, Figure 10 shows a container 10 comprising utility supply means being supplied via routing means 17 from the base of the growing system.

It will be appreciated that the spacer container 10' may be provided with releasable latching mechanisms to allow the spacer container 10' to be attached to the container 10 underneath. This may be required should a load handling device 30 be required to pick up a container 10 having a spacer container 10' mounted thereon. However, it will further be appreciated that alternative forms of load handling devices may be used to enable tall plants 150 to be handled in standard sized containers 10.

In use, seeds or seedlings are planted in the growing means within each container 10. The container 10 is provided with water or food as required for the plant contained therein to grow. The containers 10 are placed in stacks 12 within the growing system by the load handling means 30. The propagation of the plants is monitored either remotely by sensing means located within the system or by periodically removing containers 10 from the system to inspect the crops. The containers 10 are removed from the system by load handling devices operating on the substantially horizontal grid structure mounted on the framework. A target container 10 is picked from the system and transported by the load handling device to the service area. The load handling device positions the target container 10 on a conveyor loop comprising driven roller means or other suitable moving mechanism capable of moving the target container around the conveyor loop 120.

Whilst the container 10 is on the conveyor loop tasks may be performed, for example crops may be picked, seedlings may be thinned out, fertiliser may be added, the tasks being performed manually by operatives or robotically under the control of a centralised computerised utility.

Once the required tasks are completed the container 10 may be collected by a load handling device and placed back in a stack 12 within the growing system.

It will be appreciated that in this manner a large number of actions may be performed automatically that would normally be labour intensive and time consuming. Additionally, use of appropriate sensing means can ensure that each variety of plant within the system may receive the optimum growing conditions for that variety. In this way yield may be increased in an efficient manner.

Given the highly automated and controlled nature of the system a large number of uses are envisaged. Some of these are described below but should not be considered limiting.

The system may be used for development of new variants of plants, for example, or if optimal growing conditions for given variants are being established then the use of the system will require continual monitoring and all conditions within each container will require separate parameters to be checked and the contents regularly inspected. The amount of water, nutrients and light will need to be closely monitored and varied accordingly. This will require many containers to be removed, inspected and replaced at intervals. Advantageously, this can be achieved in the present system as the process of sensing, monitoring and removal of containers 10 from the system is highly automated.

If the system is to be used for mass production of given plants or crops, the cost of production needs to be minimised and therefore the required parameters for optimum growth will have previously been established. Therefore, the lighting, water, nutrients and temperature required for each plant or crop variety will be fixed at the beginning of the growth cycle. The containers will only be removed from the growing system every 3 to 10 days for the seedlings to be re-spaced and then ultimately harvested and the containers 10 re-seeded.

Advantageously, it is possible for both types of uses to be accommodated in a single growing system. A portion of the containers 10 may contain crops for mass production, a portion of the containers may contain products under development or new variants being monitored and optimal growth protocols being established.

It will be appreciated that a portion of the system may be partitioned by suitable partition means
In the examples described herein, it will be appreciated that not all containers 10 comprise all the services described. Furthermore, some containers, particularly if used for mass production, may not require any services other than the appropriate levels of light, water and nutrients. Conversely, for containers 10 being utilised in research and development or trials, more of the sensing and monitoring means may be required in each container.

In the case of a research and development container, at regular intervals the container or containers 10 are removed from the stacks 12 by the load handling device 30 and taken to an inspection port within the system. The condition of the plants is checked and nutrients or water added to the container as required. If the plants within the container still require time to achieve maturity, the container 10 is returned to the stacks 12. If the plant has grown sufficiently and the crop is ripe, the plants or crops are removed and the container 10 is cleaned and replanted and then returned to the stacks 12.

In the case of mass production, the relevant containers 10 may not be removed for inspection, but may only be removed when the crop is expected to have reached maturity.

The sensor means provided within the containers 10, monitor the condition of the plants growing therein. Whilst a schedule of maintenance of the plants in the containers 10 may be used, it will be appreciated that the sensors may trigger a container 10 being removed from the stacks 12 outside of the maintenance schedule. For example, if a container 10 contains growing mushrooms but the mushrooms are over ripe a sensor may detect a gas associated with food ripening and the container 10 may be removed outside of the maintenance schedule for inspection.

Certain greenhouses operate in an atmosphere with elevated levels of CO2. It will be appreciated that in these situations, suitable gas sensing means would be able to monitor and control the levels of CO2 accordingly.

It will be appreciated that many crops may be grown in such mechanised greenhouses. These include but are not limited to mushrooms, chillies, herbs, and lettuce. In some places, where energy is abundant but water scare this kind of system could also be used to grow cereal crops and other living organisms. Whilst the embodiments described here refer mainly to plant growth either for mass production or research and development purposes, it will be appreciated that any living organism, plant, animal or fungi could be grown in such a growing system. For example, the growing system could be used for the growth of fish, chickens, oysters, and lobsters. Additionally, the system could be used for GM trials, pharmaceutical trials, the storage of wine that needs specific maturing conditions, or cheese that need careful temperature and humidity control.

It is an advantage of this system of growing crops, that multiple crops may be grown in a single location, as different containers 10 may contain different crops. Furthermore, growing the plants in containers 10 prevents the spread of disease through a large crop as disease, blight, fungus or other plant related problems will be confined to individual containers 10. Whilst it should be possible to limit the infestation from the outside environment through filters in the system warehouse, any breach of this could be contained in individual containers, such that "plant related problems" could be minimised.

It will be appreciated that the growing system comprises a large number of containers 10 arranged in stacks 12. In one embodiment, the growing system comprises containers 10 of different categories dispersed within the system. For example, there may be empty containers 10, containers 10 growing plants, containers 10 containing goods to be stored, containers containing services such as power supplies or communications means, containers 10 comprising heating means, containers 10 comprising cooling means, containers 10 comprising goods requiring liquids and/or light.

It will be appreciated that some containers 10 may contain one or more of the services or devices referred to above. For example a container 10 with a reservoir 54 may also be provided with lighting means 60.

The lighting means 60 may take the form of LED lights or fluorescent tubes or any other suitable form of lighting.

The provision of data logging and condition monitoring means in containers 10 within the stacks 12 enables a map of the condition and topography of the system to be generated that would not otherwise be possible unless specific containers 10 were removed and examined.

Furthermore, providing services to specific individual containers 10 either via the uprights 16 or via container-to-container contacts, enables goods having different requirements to be stored within the same growing system without resorting to portioning the system and separating goods with different requirements in to separate sections of the grid.

Additionally, connections between containers 10 and communications between containers 10 and stacks 12 will generate a knowledge base of the growing system in real time that will assist in the event of a power outage for example, that will aid in possible disaster recovery. The alternative would be to empty all the containers and rebuild the stack which would be inefficient and costly.

It will be appreciated that all containers 10 may be removed from the stacks 12 by the load handling devices 30. No container 10 is fixed in a position and all contacts are makeable and breakable between the containers 10. Furthermore, containers 10 requiring services being passed through the uprights 16 are not fixed to the uprights 16 in any way. Any suitable make and break connection may be used.

It will further be appreciated that individual containers may be provided with one service, a selection of services or all service described. Furthermore, the services listed should not be regarded as limiting. Any form of service that is capable of being carried or transmitted to a container 10 may be envisaged.

In one embodiment of the invention, given for example only, the containers 10 comprise trays on which the plants are grown. The trays are approximately 1000x1400mm. The trays comprise a frame, tall enough to allow the plants to grow to their natural harvesting height. In the specific embodiment, trays are stacked up to 20m tall or more. Each tray is lit, either from lights attached to the top frame of the tray, from the base of the tray above or from lights in the grid as shown in example form only in Figures 6a to 6d above. All processing (planting, harvesting, pruning, spraying and potentially watering) is undertaken at specialised work stations with good ergonomics and potentially robots or other automation.

It will be appreciated that a plurality of different lighting arrays may be used. For example different arrays may be used during the early part of the plant's growth than to the end of plant growth. In the beginning stages, focusing all light on the plant and reducing the waste of lighting the surrounding soil would be preferable. Separate arrays may be utilised or a portion of lights may be switched off. Therefore, the lighting means 60 may be moveable with reference to the crop growing in the container 10. For example, should the crop grow in height, the level of the lighting means 60 may be raisable and lowerable relative to the height of the crop in the container 10.

In a further embodiment, the plants may be grown upside down and lit from below. Advantageously, this would reduce the energy expended by the plant to move water and nutrients against gravity and may make some species grow faster.

The main reason for removing plants from the growing system to re-pot or re-space them such that maximum use is made of the lighting provided. A key advantage is that such handling can be made using automated means which can be fully utilised 24x7, thus making it very capital and labour efficient. Inspection can also be done by automated means, which can be expensive.

In a further embodiment, it may be advantageous to move the plants to the inspection stations used 24x7, rather than having continuous monitoring in every container.

In a further embodiment, sections of the growing system may be partitioned from the remainder of the growing system. For example, should a portion of the system require properties different from the rest of the system, it would be possible to partition a number of stacks 12. It will be appreciated that the partitions may be of a permanent fixed nature, or alternatively the partitions may comprise openable and closeable shutter systems to enable a more flexible partitioning system.

It will also be appreciated that the partitioning may have additional advantages, for example, partitioning enables sections of the growing system to be isolated from other sections, for example different portions of the system can be maintained at different temperatures. Furthermore, in the case where the system is used for such plant growing uses, there may be advantages in having different gaseous atmospheres in different portions of the system. For example, at different points in the growing cycle of certain crops, it may be advantageous for the crop to be exposed to different levels of CO2 in the atmosphere. This may be achieved by partitioning the system.

Furthermore, although the embodiments of the invention described above, and shown in the Figures, detail systems in which the containers 10 are all of a substantially identical size and shape, it will be appreciated that this need not be the case. As described in UK Patent Application No. GB1506364.7 filed 15th April 2015, it will be appreciated that such a system may be configured to handle containers 10 of multiple sizes by use of load handling devices 30 of differing sizes capable of lifting and moving containers 10 of multiple sizes.

Many variations and modifications not explicitly described above are also possible without departing from the scope of the invention as defined in the appended claims.

## Claims

1. A growing system comprising: a first set of substantially parallel rails or tracks (22a) and a second set of substantially parallel rails or tracks (22b) extending transverse to the first set (22a) in a substantially horizontal plane to form a grid pattern comprising a plurality of grid spaces; a plurality of storage containers (10) arranged in stacks (12), located beneath the grid spaces and; at least one load handling device (30) disposed on the tracks (22), arranged to move laterally above the stacks (12) on the rails, the load handling device (30) comprising a lifting device arranged to lift at least one container (10), or part thereof, from a stack (12), the system being **characterised in that** a number of the containers (10) comprise service means suitable for cultivation, controlling or maintaining living organisms and connection means (40) positioned on co-operating surfaces of the containers (10) and configured to carry services between two or more co-operating containers (10) in a stack so that the service can be transferred in the containers (10) of the stack (12) when the containers (10) are located in the growing system, wherein the connection means (40) comprises releasably latching connectors.

2. A system according to claim 1, wherein some or all of the containers comprise lighting means (60).

3. A system according to claim 2, wherein the lighting means (60) comprises light emitting means emitting light of a wavelength or range of wavelengths suitable for the cultivation, control or maintenance of living organisms.

4. A system according to any preceding claim, wherein the living organisms comprise growing crops or organisms under research and development.

5. A system according to claim 4, wherein a proportion of the containers (10) comprise growing crops.

6. A system according to claim 4, wherein a proportion of the containers (10) comprise organisms under research and development.

7. A system according to any preceding claim, wherein some or all of the containers (10) comprise power supply means.

8. A system according to any preceding claim, wherein some or all of the containers (10) comprise power control means.

9. A system according to any preceding claim, wherein some or all of the containers (10) comprise sensor means and data logging means for monitoring the output of the sensor means.

10. A system according to any preceding claim, wherein some or all the containers (10) comprise communication means for communicating with adjacent containers (10) or with a central communications manager.

11. A system according to any preceding claim, wherein some or all of the containers (10) comprise heating means for heating the contents of the containers (10).

12. A system according to any preceding claim, wherein some or all of the containers (10) comprise cooling means for cooling the contents of the containers.

13. A system according to any preceding claim, wherein some or all of the containers (10) comprise a reservoir (54), the reservoir (54) acting as a fluid sink in the container (10).

14. A system according to claim 2 or any claim dependent thereon, wherein the length of time the lighting means (60) is operable being controllable and variable.

## Patentansprüche

1. Aufzuchtsystem, umfassend:
einen ersten Satz von im Wesentlichen parallelen Schienen oder Bahnen (22a) und einen zweiten Satz von im Wesentlichen parallelen Schienen oder Bahnen (22b), die sich quer zu dem ersten Satz (22a) in einer im Wesentlichen horizontalen Ebene erstrecken, um ein Gittermuster zu bilden, das eine Vielzahl von Gitterräumen umfasst;
eine Vielzahl von in Stapeln (12) angeordneten Speicherbehältern (10), die sich unterhalb der Gitterräume (22) befinden; und
mindestens eine Lasthandhabungsvorrichtung (30), die auf den Schienen (22) angeordnet und so ausgebildet ist, das sie sich seitlich über die Stapel (12) an den Schienen bewegt, wobei die oder jede
Lasthandhabungsvorrichtung (30) eine Hebevorrichtung umfasst, die so angeordnet ist, dass sie mindestens einen Behälter (10) oder einen Teil davon von einem Stapel (12) anhebt,
wobei das System **dadurch gekennzeichnet ist, dass** eine Anzahl der Behälter (10) ein Behandlungsmittel, das für die Kultivierung, Kontrolle oder Erhaltung von lebenden Organismen geeignet ist, und ein Verbindungsmittel (40) umfasst, das auf zusammenwirkenden Oberflächen der Behälter (10) positioniert und so konfiguriert ist, dass es Behandlungsvorgänge zwischen zwei oder mehr zusammenwirkenden Behältern (10) in einem Stapel überträgt, so dass der Behandlungsvorgang in den Behältern (10) des Stapels (12) übertragen werden kann, wenn sich die Behälter (10) in dem Aufzuchtsystem befinden,
wobei das Verbindungsmittel (40) lösbar einrastende Verbinder umfasst.

2. System nach Anspruch 1, wobei einige oder alle Behälter ein Beleuchtungsmittel (60) umfassen.

3. System nach Anspruch 2, wobei das Beleuchtungsmittel (60) ein lichtemittierendes Mittel umfasst, das Licht mit einer Wellenlänge oder einem Wellenlängenbereich emittiert, die bzw. der für die Kultivierung, Kontrolle oder Erhaltung von lebenden Organismen geeignet ist.

4. System nach einem der vorhergehenden Ansprüche, wobei die lebenden Organismen wachsende Pflanzen oder Organismen in Forschung und Entwicklung umfassen.

5. System nach Anspruch 4, wobei ein Teil der Behälter (10) wachsende Pflanzen enthält.

6. System nach Anspruch 4, wobei ein Teil der Behälter (10) Organismen enthält, die sich in der Forschung und Entwicklung befinden.

7. System nach einem der vorhergehenden Ansprüche, wobei einige oder alle Behälter (10) das Energieversorgungsmittel umfassen.

8. System nach einem der vorhergehenden Ansprüche, wobei einige oder alle Behälter (10) ein Energiesteuermittel umfassen.

9. System nach einem der vorhergehenden Ansprüche, wobei einige oder alle Behälter (10) ein Sensormittel und ein Datenaufzeichnungsmittel zur Überwachung der Ausgabe des Sensormittels umfassen.

10. System nach einem der vorhergehenden Ansprüche, wobei einige oder alle Behälter (10) ein Kommunikationsmittel zur Kommunikation mit benachbarten Behältern (10) oder mit einem zentralen Kommunikationsmanager umfassen.

11. System nach einem der vorhergehenden Ansprüche, wobei einige oder alle Behälter (10) ein Heizmittel zum Heizen der Inhalte der Behälter (10) umfassen.

12. System nach einem der vorhergehenden Ansprüche, wobei einige oder alle Behälter (10) ein Kühlmittel zum Kühlen der Inhalte der Behälter umfassen.

13. System nach einem der vorhergehenden Ansprüche, wobei einige oder alle Behälter (10) ein Reservoir (54) aufweisen, wobei das Reservoir (54) als Fluidsenke in dem Behälter (10) wirkt.

14. System nach Anspruch 2 oder einem davon abhängigen Anspruch, wobei die Zeitdauer, während der das Beleuchtungsmittel (60) in Betrieb ist, steuerbar und variabel ist.

## Revendications

1. Système de culture comprenant : un premier ensemble de rails ou de pistes (22a) sensiblement parallèles et un second ensemble de rails ou de pistes (22b) sensiblement parallèles s'étendant transversalement par rapport au premier ensemble (22a) dans un plan sensiblement horizontal pour former un motif de grille comprenant une pluralité d'espaces de grille ; une pluralité de conteneurs de stockage (10) agencés en piles (12), situés sous les espaces de grille et ; au moins un dispositif de manipulation de charge (30) disposé sur les pistes (22), agencé pour se déplacer latéralement au-dessus des piles (12) sur les rails, le dispositif de manipulation de charge (30) comprenant un dispositif de levage agencé pour soulever au moins un conteneur (10), ou une partie de celui-ci, à partir d'une pile (12), le système étant **caractérisé en ce qu'**un certain nombre des conteneurs (10) comprennent des moyens de service adaptés à la culture, à la commande ou à l'entretien d'organismes vivants et des moyens de connexion (40) positionnés sur des surfaces coopérantes des conteneurs (10) et configurés pour transporter des services entre deux conteneurs coopérants (10) ou plus dans une pile de sorte que le service peut être transféré dans les conteneurs (10) de la pile (12) lorsque les conteneurs (10) sont situés dans le système de culture, dans lequel les moyens de connexion (40) comprennent des connecteurs à verrouillage libérable.

2. Système selon la revendication 1, dans lequel certains ou tous les conteneurs comprennent des moyens d'éclairage (60).

3. Système selon la revendication 2, dans lequel les moyens d'éclairage (60) comprennent des moyens d'émission de lumière émettant de la lumière d'une longueur d'onde ou d'une plage de longueurs d'onde appropriée pour la culture, la commande ou l'entretien d'organismes vivants.

4. Système selon l'une quelconque des revendications précédentes, dans lequel les organismes vivants comprennent des cultures en croissance ou des organismes en recherche et développement.

5. Système selon la revendication 4, dans lequel une proportion des conteneurs (10) comprend des cultures en croissance.

6. Système selon la revendication 4, dans lequel une proportion des conteneurs (10) comprend des organismes en recherche et développement.

7. Système selon l'une quelconque des revendications précédentes, dans lequel certains ou tous les conteneurs (10) comprennent des moyens d'alimentation électrique.

8. Système selon l'une quelconque des revendications précédentes, dans lequel certains ou tous les conteneurs (10) comprennent des moyens de commande de puissance.

9. Système selon l'une quelconque des revendications précédentes, dans lequel certains ou tous les conteneurs (10) comprennent des moyens de détection et des moyens d'enregistrement de données pour surveiller la sortie des moyens de détection.

10. Système selon l'une quelconque des revendications précédentes, dans lequel certains ou tous les conteneurs (10) comprennent des moyens de communication pour communiquer avec des conteneurs adjacents (10) ou avec un gestionnaire de communications central.

11. Système selon l'une quelconque des revendications précédentes, dans lequel certains ou tous les conteneurs (10) comprennent des moyens de chauffage pour chauffer le contenu des conteneurs (10).

12. Système selon l'une quelconque des revendications précédentes, dans lequel certains ou tous les conteneurs (10) comprennent des moyens de refroidissement pour refroidir le contenu des conteneurs.

13. Système selon l'une quelconque des revendications précédentes, dans lequel certains ou tous les conteneurs (10) comprennent un réservoir (54), le réservoir (54) agissant comme un puits de fluide dans le conteneur (10).

14. Système selon la revendication 2 ou l'une quelconque des revendications qui en dépendent, dans lequel la durée pendant laquelle les moyens d'éclairage (60) peuvent fonctionner peut être commandée et modifiée.
